# FASCICULE DE BREVET EUROPEEN

(11) **EP 1 374 018 B1**
(45) Date de publication et mention de la délivrance du brevet: **16.03.2005**
(21) Numéro de dépôt: 02759746.7
(22) Date de dépôt: 02.04.2002
(51) Int. Cl.: G06F 1/00, G06F 12/14

(54) **SYSTEME ET PROCEDE DE CONTROLE D'ACCES A DES DONNEES PROTEGEES STOCKEES DANS UNE MEMOIRE**
SYSTEM UND VERFAHREN ZUR STEUERUNG DES ZUGANGS ZU IN EINER SPEICHEREINHEIT GESPEICHERTEN GESCHÜTZTEN DATEN
SYSTEM AND METHOD FOR CONTROLLING ACCESS TO PROTECTED DATA STORED IN A STORAGE UNIT

(30) Priorité: 03.04.2001 FR 0104529
(43) Date de publication de la demande: 02.01.2004
(73) Titulaire: STMicroelectronics S.A., 92120 Montrouge (FR)
(72) Inventeur: Link, Jean-François, F-13530 Trets (FR); Davidescu, Dragos, F-13800 Aix-En-Provence (FR)
(74) Mandataire: Bentz, Jean-Paul
(86) Numéro de dépôt international: PCT/FR2002/001143
(87) Numéro de publication internationale: WO 2002/082241

(56) Documents cités:
- WO-A-00/75759
- US-A- 4 864 542
- US-A- 5 704 039
- US-B1- 6 182 205

## Description

L'invention concerne la protection de la confidentialité de données stockées en mémoire, et notamment en mémoire figée. Celle-ci peut être une mémoire semiconducteur du type ROM (read-only memory) destinée à contenir, par exemple, un programme sous forme de code source. On trouve une telle mémoire au sein d'une puce formant un microcontrôleur, celle-ci étant alors reliée aux diverses unités fonctionnelles du microcontrôleur par des bus internes. Les données stockées dans la mémoire ROM ne sont utilisées qu'à l'intérieur de microcontrôleur, par exemple pour exécuter un programme utilisateur. Il est souvent inutile et indésirable que l'utilisateur final du microcontrôleur puisse lire les données de la mémoire ROM depuis l'extérieur. En effet, ces données peuvent concerner des logiciels protégés, ou des informations propriétaires ou personnelles. On note à ce propos que l'observation de l'exécution au niveau du microcontrôleur d'un code stocké dans la mémoire ROM ne permet pas d'en déduire son contenu.

Par ailleurs, il est généralement prévu un mode de test pour vérifier depuis l'extérieur le contenu de la mémoire afin de déterminer si elle est correctement programmée et que les circuits de lecture fonctionnent correctement. Ce mode test peut être commandé au niveau de la mémoire de plusieurs façons. Typiquement, cela s'opère par un signal appliqué sur une entrée de validation ou de sélection de la mémoire, connue sous la désignation anglaise d'entrée "chip select" (CS) ou "chip enable" (CE) .

La plupart des solutions permettant de protéger en lecture le contenu d'une mémoire telle qu'une ROM font que cette entrée CS est validée dans un mode utilisateur pour permettre l'exécution du programme contenu en mémoire, mais inhibée lorsque la mémoire est mise en mode test par l'utilisateur non autorisé, i.e. en dehors des conditions admises de test.

Une technique classique pour assurer cette condition consiste à prévoir une liaison fusible au sein de la mémoire. La liaison fusible est conçue pour shunter la protection à la lecture et permettre donc l'accès systématique du contenu de la mémoire, par exemple selon un mode de déchargement "dump". De cette manière, le fabricant ou le programmeur de la mémoire peut utiliser la fonction de test à un stade initial pour lire la mémoire et vérifier qu'elle ne contient pas de données erronées. Une fois ce test initial achevé, il rompt le lien fusible, par exemple en appliquant une tension de claquage, afin que la protection ne puisse plus être contournée. A partir de ce moment, le mode test n'est plus accessible. L'accès à la mémoire n'est possible que pour l'exécution du code.

Cette approche, qui constitue une option dite "statique", nécessite des étapes de fabrication supplémentaires pour la réalisation du lien fusible, ce qui :nuit aux coûts et au rendement de fabrication. Elle a aussi l'inconvénient d'inhiber la lecture de données en mode test définitivement après le claquage du lien fusible, ce qui n'est pas toujours désirable.

Une autre approche connue consiste à établir une combinaison ou séquence confidentielle de signaux logiques à appliquer sur des entrées choisies de la mémoire. La bonne combinaison ou séquence de signaux logiques permet d'accéder aux données stockées selon un mode test. Ce type de codage reste relativement simple et ne permet souvent pas d'assurer une sûreté adéquate, au contraire de la solution basée sur un lien fusible. La mise en oeuvre de ce type de protection repose sur des circuits logiques et des registres séparés de la zone mémoire. Ces éléments réalisent une logique combinatoire sur les signaux d'accès au mode test pour délivrer (ou pas) le signal de validation qui permet l'accès au mode test.

Lorsque la mémoire en question est intégrée dans un ensemble de circuits, comme dans le cas d'un microcontrôleur, une protection supplémentaire est obtenue lorsque le mode test de la mémoire délivre à l'extérieur non pas chaque donnée individuelle (par exemple sous forme d'octets stockés), mais une indication globale du contenu. Cette indication globale est généralement le résultat d'un algorithme, connu sous le terme de "checksum", appliqué par une unité interne cumulativement à chaque donnée testée de la mémoire. Le résultat est alors une valeur numérique qui est influencée par chaque octet testé. Cette valeur est livrée en sortie et comparée dans un circuit avec la valeur à laquelle elle doit correspondre si toutes les données testées sont correctes. Lors de l'exécution de l'algorithme précité, la mémoire est mise en mode "dump" afin de faire défiler les données de ses adresses successives vers le circuit interne d'exécution de l'algorithme. On note que la valeur produite en sortie résulte d'un grand nombre de données individuelles stockées et ne permet pas de reconstituer celles-ci a posteriori. Autrement dit, la valeur du résultat de l'algorithme ne dévoile pas le contenu de la mémoire, mais seulement sa conformité. Il a été prévu d'améliorer encore la sécurité en s'assurant que le résultat de l'algorithme ne peut être transmis que lorsqu'un nombre suffisant de données testées, voire toutes les données ont été traitées par l'algorithme.

Cette solution offre un bon niveau de sécurité, une bonne couverture de test, mais, de par sa vocation, ne permet jamais de lire depuis l'extérieur les valeurs individuelles stockées en mémoire. Par exemple, il n'est pas possible de faire une analyse d'erreur quand le test de lecture révèle que la mémoire ne marche pas sur une pièce telle qu'un microcontrôleur et qu'il est utile pour le diagnostic de savoir quel octet est en cause.

Le document US-A-4 864 542 décrit une cartouche mémoire amovible qui inclut une mémoire de masse. Une mémoire de mot de passe mémorise un marqueur indiquant l'interdiction d'un accès à la mémoire de masse et un mot de passe de référence. Un mot de passe saisi est comparé au mot de passe de référence. L'accès à la mémoire de masse est autorisé lorsqu'il y a concordance entre ces mots de passe. Ce document décrit une variante selon laquelle la mémoire de mot de passe est ménagée sur un même support semi-conducteur que la mémoire de masse. La cartouche présente alors une ligne de commande spécifique pour la mémoire de mot de passe.

Le document US-A-5 704 039 décrit un dispositif qui permet le verrouillage d'un code de sécurité d'un processeur. La protection vise la lecture illicite de la mémoire et de registres internes.

Le document US-B-6 182 205 décrit une mémoire amovible de PC sous forme de carte à puce. Des puces mémoires de la carte sont accessibles par un connecteur de type PCMCIA. Cette carte présente en outre une puce MPS dotée d'un microprocesseur et d'une mémoire, dédiée au contrôle d'accès aux puces mémoire. Cette puce exige un mot de passe fourni par l'utilisateur depuis son PC.

Au vu dé ce qui précède, l'invention vise un dispositif et un procédé de protection de la confidentialité des contenus d'une mémoire, notamment du type ROM, tout en permettant la lecture des données individuelles depuis l'extérieur dans un cadre restreint.

Plus précisément, un premier objet de l'invention est de proposer un système de contrôle d'accès à des données protégées stockées dans une mémoire, comprenant:
- des moyens de mémorisation ayant une zone protégée de mémorisation des données protégées et une entrée de commande permettant de bloquer ou d'autoriser l'accès à ces données, et
- des moyens de validation pour contrôler une demande d'accès aux données protégées en agissant sélectivement sur l'entrée de commande,
caractérisé en ce qu'il intègre une clé interne, et en ce qu'il comprend des moyens d'entrée d'une clé d'entrée fournie depuis l'extérieur, les moyens de validation autorisant l'accès aux données protégées que lorsqu'il y a concordance entre la clé interne et la clé d'entrée.

Avantageusement, la clé interne est stockée dans les moyens de mémorisation, et notamment dans la zone protégée avec les données protégées.

Les moyens de validation sont de préférence reliés à une liaison interne permettant le chargement de la clé interne et à une liaison externe permettant le chargement de la clé d'entrée, les moyens de validation comprenant en outre des moyens de blocage de communication de données interdisant un transfert de données de la liaison interne vers la liaison externe lorsque la clé interne est susceptible d'être présente dans la liaison interne.

La liaison externe peut être un système d'entrée et de sortie de données régi par le protocole JTAG, les moyens de blocage agissant sur une entrée de validation du protocole JTAG. JTAG est l'acronyme de l'expression anglo-saxonne "JOINT TEST ACTION GROUP".

La liaison interne peut faire partie d'un bus de données d'un circuit comprenant une unité centrale CPU, les moyens de validation comprennent des moyens pour inhiber l'unité centrale et assurer de manière autonome la commande du bus de données et le chargement de la clé interne.

Les moyens pour inhiber l'unité centrale peuvent agir sur l'entrée d'horloge de celle-ci.

Les moyens de mémorisation comprennent une zone de commande de lecture dans laquelle sont stockées des commandes de lecture de la clé interne.

La zone de commande de lecture est régie par une commande séparée de la commande de lecture de la zone protégée.

La clé interne peut occuper une ou plusieurs adresses, chacune étant considérée comme occupant un octet, par exemple. Lorsqu'elle occupe plusieurs adresses, les moyens de validation comprennent avantageusement des moyens pour charger des parties de la clé interne depuis leurs adresses respectives et des parties correspondantes de la clé d'entrée et pour autoriser l'accès aux informations protégées seulement s'il y a concordance sur l'ensemble des parties.

Le système peut être intégré dans un microcircuit comprenant une unité centrale, tel qu'un microcontrôleur ou un microprocesseur.

Il peut aussi être intégré dans un bloc fonctionnel de mémorisation de données faisant partie d'un microcircuit.

Dans ce dernier cas, les moyens de validation sont de préférence interposés entre d'une part un réseau mémoire comprenant les données protégées et la clé interne, et d'autre part les ports de connexion aux bus de données et d'adresses et de l'entrée de validation CS (chip select).

Le microcircuit peut comprendre un élément (option test) permettant à un stade initial de sélectionner la mise en oeuvre de la protection par clé. Dans les modes de réalisation décrits, les moyens de mémorisation comprennent une mémoire semiconducteur figée du type ROM, destinée par exemple à stocker des données protégées qui constituent un code source d'un microprogramme.

Selon un deuxième aspect, l'invention concerne un microcircuit comprenant des moyens d'exécution d'un microprogramme contenu dans des moyens de mémorisation, caractérisé en ce que l'accès depuis l'extérieur du microcircuit aux éléments du microprogramme est contrôlé par un système de contrôle d'accès à des données protégées stockées tel que décrit plus haut.

Selon un troisième aspect, l'invention concerne une mémoire semiconducteur, caractérisée en ce qu'elle comprend un système de contrôle d'accès à des données protégées stockées tel que décrit plus haut.

Selon un troisième aspect, l'invention concerne un procédé de contrôle d'accès à des données protégées stockées dans une zone protégée de moyens de mémorisation, ces derniers ayant une entrée de commande permettant de bloquer ou d'autoriser l'accès à ces données, caractérisé en ce que l'accès aux données protégées n'est autorisé que s'il y a concordance entre une clé interne et une clé d'entrée fournie depuis l'extérieur.

Les caractéristiques optionnelles de l'invention présentées dans le cadre du système s'appliquent mutatis mutandis au procédé défini plus haut.

La solution conforme à l'invention repose sur une option statique. Dans le mode de réalisation préféré, l'espace de stockage de la mémoire réserve un ou plusieurs emplacement(s) de mot(s) binaire(s), par exemple d'octet(s), pour stocker une clé confidentielle. Cette clé peut être choisie par la personne qui établit la confidentialité des données stockées, telle que le fabricant de la mémoire ou un tiers propriétaire des données. Le contenu de cette clé peut être variable arbitrairement en fonction de divers critères (par exemple selon le contenu des données, le support physique, etc.) mais la position en mémoire de la clé est avantageusement fixée à l'avance.

Si la mémoire sert à stocker un programme utilisateur (code logiciel utilisateur), la clé est de préférence stockée dans ce code. De ce fait, elle n'est, pas accessible par un test classique, puisque la zone mémoire contenant le code logiciel utilisateur est protégée. La lecture de la mémoire dans ces conditions peut s'effectuer de la manière suivante: on entre tout d'abord dans un mode test particulier qui permet la lecture en interne de la clé en mémoire mais qui empêche de communiquer cette clé vers l'extérieur. Dans le même temps, par un protocole prédéfini, on introduit la clé dans le circuit associé à la mémoire, par exemple en chargeant un registre. Puis, le circuit étant toujours dans ce mode spécial, on fait une lecture de la clé présente dans la mémoire, que l'on compare à la valeur chargée dans le registre. S'il ressort de la comparaison qu'il y a identité entre ces deux clés, la mémoire devient accessible jusqu'à la fin du test et son contenu peut être communiqué vers l'extérieur. Dans le cas contraire, la mémoire reste protégée et on ressort du mode spécial précité.

L'invention et les avantages qui en découlent seront mieux compris à la lecture de la description qui suit des modes de réalisation préférés, donnés purement à titre d'exemples non-limitatifs par référence aux dessins annexés dans lesquels :
- la figure 1 est un schéma bloc montrant le principe de l'invention dans le cas d'une mémoire protégée du type ROM associée à un système de gestion de protection au sein d'un même microcircuit, tel qu'un microcontrôleur ;
- la figure 2 est un schéma bloc des éléments de circuit principaux intervenant selon un premier mode de réalisation de l'invention, basé sur une lecture de clé en mémoire gérée par des moyens matériels ;
- la figure 3 est un organigramme des étapes de validation du mode test lorsque la clé est lue par les circuits de la figure 2 ;
- la figure 4 est un schéma bloc des éléments de circuit principaux intervenant selon un deuxième mode de réalisation de l'invention, basé sur une lecture de clé de mémoire gérée par des moyens logiciels ;
- la figure 5 est un organigramme des étapes de validation du mode test lorsque la clé est lue par les circuits de la figure 4 ;
- la figure 6 est un organigramme des étapes de validation du mode test conformément à l'invention, lorsque ce mode se présente sous forme de déchargement ("dump" mode) ; et
- la figure 7 est un schéma d'un bloc fonctionnel de mémoire ROM dans un circuit intégré, et dotée de circuits de protection conformes à l'invention.

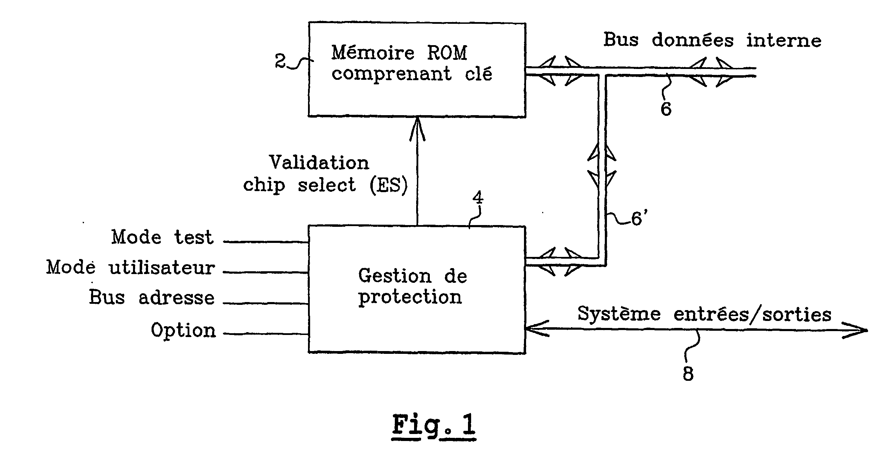

La figure 1 représente une mémoire 2 dont le contenu doit être protégé en lecture, en l'occurrence une mémoire en lecture seule (ROM), et un système de gestion de la protection 4 selon un premier mode de réalisation. Le rôle du système 4 est d'assurer que le contenu de la mémoire 2 ne peut être inspecté que dans des conditions sécurisées.

La mémoire 2 et le système de gestion de la protection (ci-après dénommé système de protection) 4 sont intégrés dans un même circuit intégré, ce dernier pouvant constituer un microcontrôleur ou un microprocesseur. Dans l'exemple considéré, le contenu protégé de la mémoire 2 est un microprogramme du type "programme utilisateur" permettant d'assurer les fonctions programmées au moyen d'une unité centrale (non représentée). En fonctionnement normal (hors mode test), les données du code source du programme utilisateur restent en interne dans le circuit intégré, et ne sont pas accessibles depuis l'extérieur. Elles transitent vers l'unité centrale ou d'autres unités du circuit via un bus de données interne 6 relié aux sorties données de la mémoire 2.

Il est également prévu un mode test dont l'accès est sécurisé par une clé codée fournie depuis l'extérieur du circuit. Si cette clé est conforme, il devient alors possible de prévoir la lecture du contenu de la mémoire 2 depuis l'extérieur dans le cadre d'un test, par exemple en commandant un mode de sortie séquentielle des données entre deux adresses (mode "dump") .

Les données de la mémoire vers l'extérieur, après autorisation, transitent via le système de gestion 4 par une branche 6' du bus de données interne. Elles sont ensuite émises vers l'extérieur depuis le système de gestion 4 sur un système d'entrées/sorties 8, tel qu'une interface de communication.

Pour le fonctionnement de la sécurisation par clé, la mémoire protégée 2 stocke la clé (que l'on désignera ci-après par le terme "clé référence") dans la zone mémoire qui contient les données protégées. De la sorte, il n'est pas possible d'accéder à la clé interne dans les conditions normales. L'adresse en mémoire de la clé référence est préétablie et connue au niveau du système de gestion 4.

Le fonctionnement du système de gestion 4 est régi par différents signaux de commande accessibles via le système d'entrées/sorties 8, dont :
- un signal "mode test" qui sélectionne le mode test (par exemple par un état logique 1). La sélection de mode test permet la sortie vers l'extérieur du contenu de la mémoire 2 sous réserve de présentation de la clé d'accès ;
- un signal "mode utilisateur" qui sélectionne le mode normal de fonctionnement du circuit, avec lecture de la mémoire 2 en interne seulement dans le cadre de l'exécution du programme utilisateur ;
- les adresses de mémoire devant être lues en mode test, celles-ci étant fournies au système de protection 4 via un bus d'adresses. Les adresses peuvent être incrémentées séquentiellement pour effectuer un mode "dump" ; et
- un signal "option" qui permet de choisir à un stade initial si le système de protection doit être utilisé. Cette option permet de réaliser physiquement l'ensemble des moyens de protection par clé sans l'imposer d'office au client. Dans ce qui suit, on suppose que l'option de protection est effectivement choisie, ce qui correspond au signal option bloqué à l'état 1.

Lorsque le mode test est sélectionné, le système de protection attend une entrée de clé d'entrée sur le système d'entrées/sorties 8. Il lit la clé interne depuis la mémoire 2 via la branche 6' et effectue la comparaison entre ces deux clés. En cas d'identité, le système de protection 4 émet un état logique de validation de la lecture de la mémoire 2 par une liaison directe sur l'entrée de validation "chip select" (CS) ou "chip enable" (CE) de la mémoire 2.

On note que la lecture de la clé est une opération fondamentale, car c'est elle qui garantit la protection. La clé ne doit en aucun cas être accessible depuis l'extérieur du circuit dans lequel est intégré la mémoire 2.

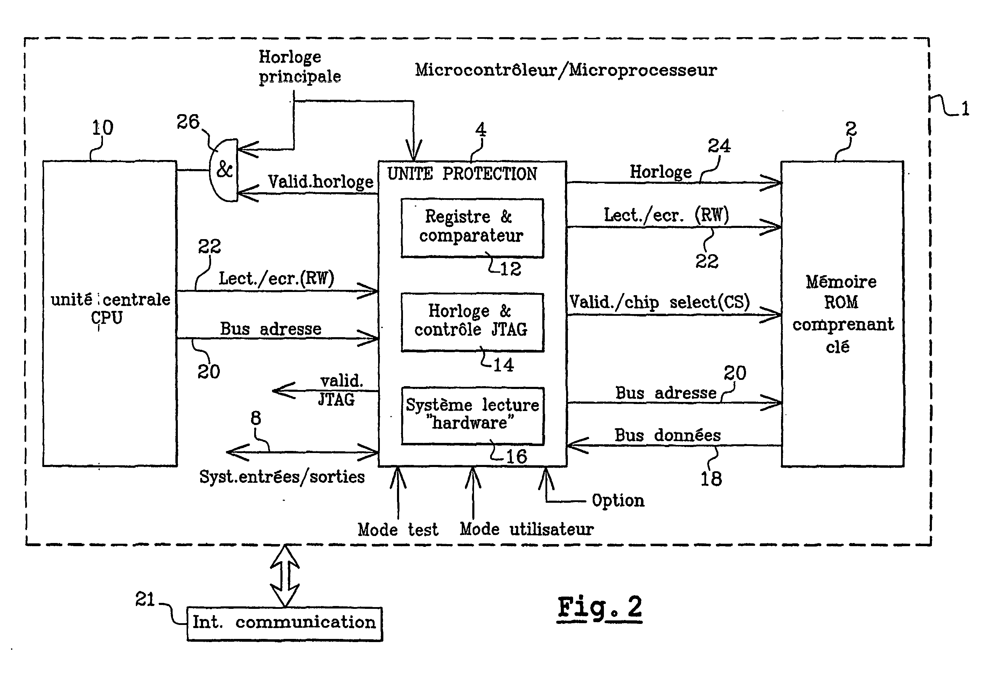

La figure 2 illustre une mise en oeuvre du principe de l'invention par des moyens essentiellement matériels (hardware). Le système de protection est ici matérialisé par une unité de protection 4 réalisée essentiellement en logique câblée, qui est interposée entre la mémoire ROM 2 et l'unité centrale (CPU) 10 du microcircuit auquel il est intégré. Ce microcircuit (circuit intégré) peut être notamment un microcontrôleur ou un microprocesseur 1 qui utilise la mémoire 2, par exemple pour stocker du code logiciel.

L'unité de protection 4 comporte trois ensembles fonctionnels :
- un bloc registre et comparateur 12 destiné au stockage de la clé référence extraite de la mémoire et de la clé d'entrée, et à la comparaison de ces deux clés. Il émet en interne un signal logique signalant l'identité ou pas entre ces deux clés ;
- un circuit de contrôle de l'horloge principale du circuit intégré et de contrôle de la sortie de données vers l'extérieur. Pour ce dernier contrôle, le circuit intervient sur la commande de validation de sortie de données selon le protocole JTAG qui régit l'échange de données sur le bus de données 18, et
- un système de lecture en logique câblée (hardware) qui gère la lecture de la clé interne depuis la mémoire 2.

L'unité 4 commande également la mise hors service de l'unité centrale 10 durant les phases critiques de transfert de la clé interne vers le registre 12. Dans l'exemple, cette fonctionnalité est obtenue au moyen d'une porte ET à deux entrées 26, l'une reliée à l'arrivé des signaux d'horloge principale et l'autre reliée à une sortie de validation/inhibition de l'unité de protection 4, la sortie de la porte ET étant reliée à l'entrée de d'horloge de l'unité centrale. De la sorte, la sortie validation/inhibition permet de bloquer l'unité centrale 10 par la présence d'un état logique 0 à sa sortie de validation/inhibition.

Les voies internes du circuit constituées par le bus d'adresses 20, le bus lecture/écriture (RW) 22 et l'arrivée de l'horloge principale 24 arrivent à la mémoire via l'unité de protection 4. En outre, l'unité de protection 4 produit le signal logique de validation (chip select) CS de la lecture de la mémoire sous son propre contrôle.

Dans l'exemple, le système d'entrées/sorties 8 est reliée à une interface de communication 21 qui constitue un port avec l'environnement extérieur.

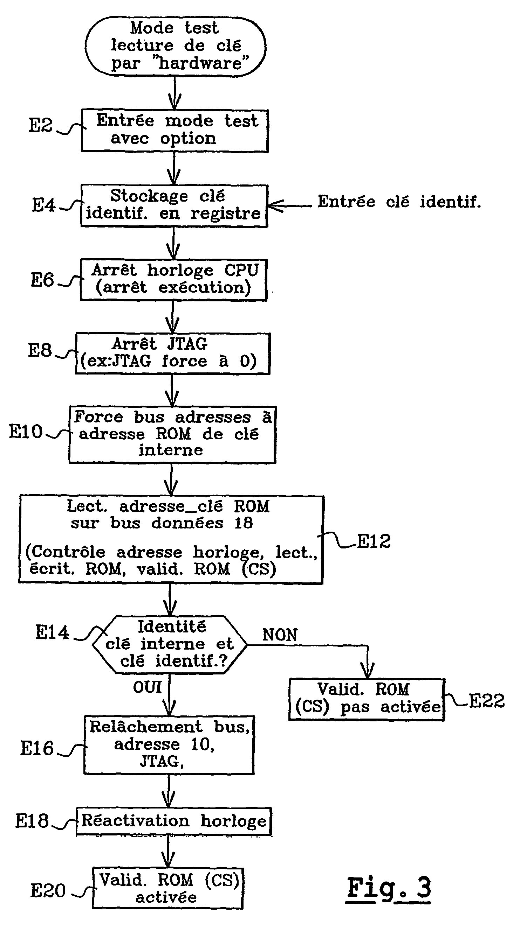

Les étapes intervenant dans la mise à disposition sécurisée du mode test avec lecture de la clé interne par des moyens matériels (hardware) seront décrites par référence à la figure 3.

Le démarrage du mode test s'effectue par l'application d'un état logique 1 à l'entrée "mode test" de l'unité de protection 4, en supposant que l'option de mise à disponibilité de ce mode ait été présélectionnée lors de la réalisation de la mémoire 2 (étape E2) .

Ensuite, on entre depuis l'extérieur la clé d'entrée dans un registre de l'ensemble 12, via le système d'entrées/sorties 8, selon le protocole JTAG (étape E4).

En réponse, l'unité de protection 4 émet un état logique 0 à sa sortie validation/inhibition afin de bloquer l'arrivée des signaux d'horloge à l'unité centrale 10 (étape E6). A partir de ce moment, l'unité de protection 4 prend contrôle du bus d'adresses 20 et de l'horloge au niveau de la mémoire 2, et inhibe le système permettant de sortir des données vers l'extérieur (étape E8). Cette inhibition peut être réalisée en bloquant l'application du protocole JTAG qui permet de communiquer vers l'extérieur le contenu du bus de données 18. De cette manière, on bloque les issues de sortie des données de la mémoire vers l'extérieur, en anticipation de la lecture de la clé interne sur ce bus de données.

L'unité de protection 4 force ensuite le bus d'adresses 20 à choisir l'adresse de la mémoire 2 où est stockée la clé interne (étape E10). Cette adresse est enregistrée de manière fixe et permanente au sein de l'unité de protection 4 et correspond à un protocole préétabli. On note que la clé peut contenir un ou plusieurs octets ; dans ce dernier cas, le système sera programmé pour sélectionner et enregistrer la succession d'adresses correspondante.

Les données relatives à la clé interne sont ainsi lues de la mémoire 2 et chargées dans un registre de l'ensemble 12 via le bus de données (étape E12). La clé d'entrée et la clé interne sont analysées dans le comparateur pour déterminer s'il y a identité (étape E14).

S'il y a identité, le mode test est autorisé. L'ensemble du circuit est alors de nouveau activé. L'unité de protection 4 commande alors le relâchement du bus adresses 20 et la remise en marche du protocole JTAG pour y permettre la circulation de données (étape E16). L'unité de protection 4 commande également la remise en service de l'unité centrale 10 par le signal de validation de l'horloge (étape E18), le relâchement du bus d'adresses 20, et l'autorisation de la sortie des données de la mémoire 2 vers l'extérieur, par activation de l'entrée de validation "chip select" CS (étape E20). Il est ainsi possible de recueillir ces données sur un dispositif externe pour en vérifier la validité. A cette fin, la mémoire peut être mise en mode "dump", ou tout autre mode approprié.

S'il n'y a pas identité, le mode test est refusé et la mémoire 2 reste bloquée en lecture par inhibition de l'entrée de validation "chip select" CS (étape E22). A partir de ce constat de clé d'entrée erronée, l'unité de protection 4 peut également commander d'autres actions selon un choix du concepteur du système, par exemple en permettant de nouveau un nombre limité de fois le retour à l'étape E2 ou E4 pour permettre une autre entrée de clé d'entrée (une limite étant fixée à par exemple trois tentatives consécutives), le maintien du blocage du circuit, l'enregistrement de la non-identité pour informer une source extérieure, etc.

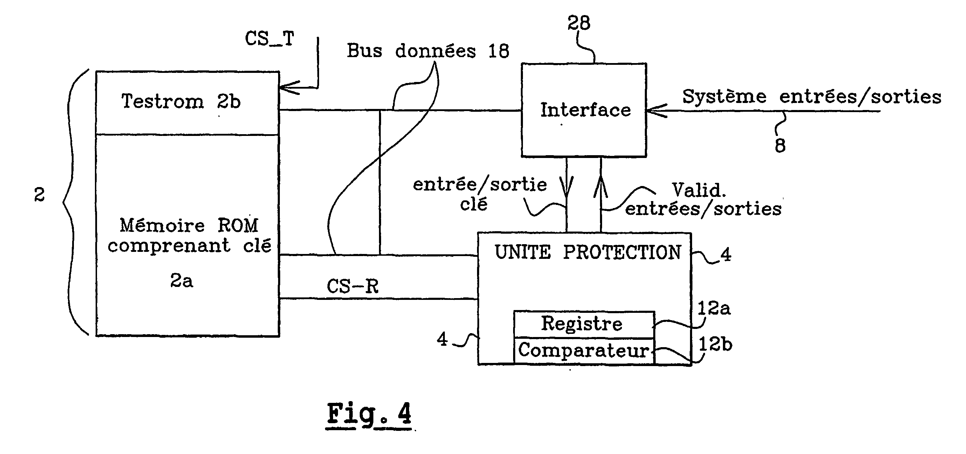

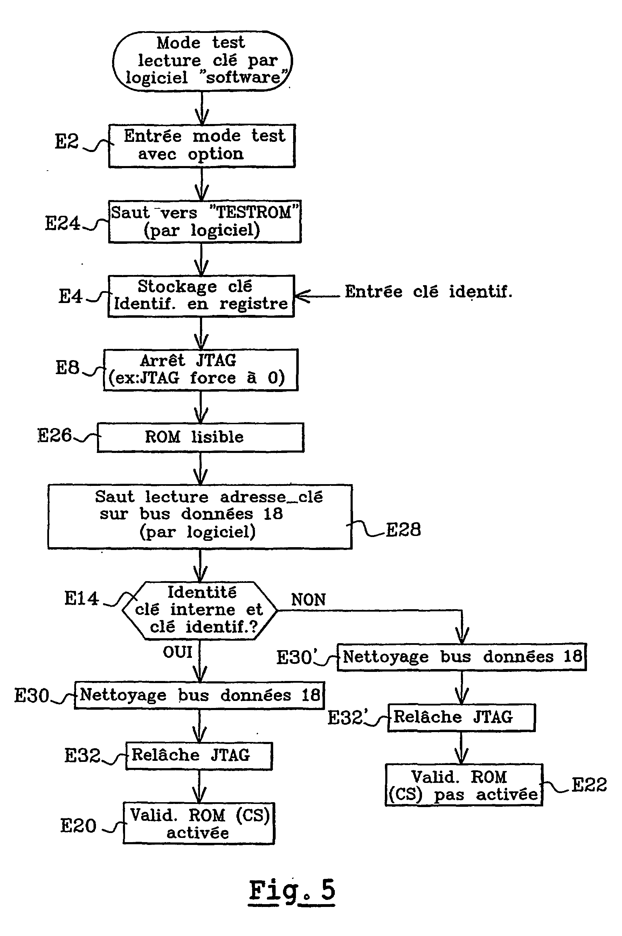

Il sera maintenant décrit par référence aux figures 4 et 5 un deuxième mode de réalisation de l'invention selon lequel la lecture de la clé en mémoire est régie principalement par des moyens logiciels stockés dans la mémoire même 2 (partie 2a). Dans ce cas, le protocole d'entrée en mode test peut mettre en fonctionnement un circuit de lecture sécurisé de la mémoire.

Par des moyens matériels (hardware), on bloque la sortie des données vers l'extérieur ainsi que l'éventuelle possibilité d'exécuter un code extérieur (par exemple, en inhibant l'exécution du protocole JTAG), et on exécute un programme stocké dans une partie 2b de la mémoire 2 réservée au test (partie "TESTROM"). Dans le même temps, la protection de la mémoire 2 est désactivée. Le programme lit la clé, la stocke dans un registre, modifie le bus de données 18 pour effacer la trace de la clé et relâche les systèmes de communication 8 avec l'extérieur. La comparaison s'effectue toujours par des moyens matériels (hardware), et le résultat détermine l'accès au mode test de la mémoire ou non.

La figure 4 montre les éléments principaux qui interviennent dans ce mode de réalisation. Une unité d'interface 28 au sein du circuit commande l'échange de données entre l'extérieur et la mémoire protégée 2, ainsi que l'unité de protection 4. Elle est interposée notamment entre le bus de données 18 et le système d'entrées/sorties 8. L'accès à la partie "TESTROM" 2b est commandée par une entrée de validation CS-T (chip select TESTROM) spécifique. L'accès à la partie 2a contenant la clé interne avec les données protégées est commandée par une entrée CS-R (chip select reste de la mémoire).

Les étapes intervenant dans la mise à disposition sécurisée du mode test avec lecture de la clé interne par des moyens logiciels (software) seront décrites par référence à la figure 5. Les étapes analogues à celles de la figure 3 sont identifiées de manière correspondante.

Ce mode démarre par l'entrée en mode test avec option activée, comme dans le cas précédent (étape E2). A la demande d'entrer en mode test, le logiciel principal du circuit (qui peut être stocké dans la mémoire ROM 2) commande un saut vers une routine (TESTROM) de vérification de clé (étape 24), cette routine étant stockée dans la partie 2b de la mémoire 2. L'accès à cette portion de la mémoire est alors commandé par le signal CS_T (chip select TESTROM), provenant de l'unité de protection 4 ou d'une autre partie du circuit.

Ensuite, le circuit se met en attente d'une clé d'entrée et lorsque celle-ci est présentée sur le système d'entrées/sorties 8, la stocke dans le registre 12a prévu à cet effet de l'unité de protection (étape E4). Le logiciel TESTROM commande alors le blocage de toute communication de données avec l'extérieur en mettant en arrêt le protocole JTAG, par exemple en forçant son entrée de validation à 0 (étape E8). La mémoire ROM 2 est ensuite rendue lisible au niveau de sa partie 2a qui stocke la clé interne, sans risque de perte de confidentialité.

La routine TESTROM commande la lecture de la clé interne pour que celle-ci soit transmise sur le bus de données 18 vers le registre 12a de l'unité de protection 4 (étape E28). A cette fin, le logiciel TESTROM stocke la ou les adresse(s) préétablie(s) de la partie 2a de la mémoire 2.

La clé d'entrée fournie extérieurement et la clé interne sont alors toutes les deux inscrites dans des portions respectives du registre précité 12a. Ces deux clés sont comparées afin de déterminer si elles sont identiques (étape E14).

S'il y a identité (clé d'entrée correcte) le logiciel TESTROM commande un nettoyage du bus de données 18 afin d'en retirer la présence de la clé interne, en vue du fait que ce bus sera redevenu accessible (étape E30). Le nettoyage est réalisé en forçant une valeur quelconque dépourvue d'information sur le bus de données 18, par exemple la valeur 00.

Ensuite, le logiciel TESTROM commande le relâchement du blocage du protocole JTAG pour permettre la sortie de données sur le système d'entrées/sorties 8 (étape E32), et valide l'activation du mode lecture (chip select) de la mémoire, permettant la lecture des données de celle-ci depuis l'extérieur via le système d'entrées/sorties 8 (étape E20).

S'il n'y a pas identité (clé d'entrée erronée), le logiciel TESTROM commande d'abord le nettoyage du bus de données (étape E30'), et relâche le blocage du protocole JTAG (étape E32'), à l'instar des étapes E30 et E32 précitées. Ce relâchement est justifié par le fait que dans l'exemple, le fonctionnement normal (mode utilisateur) n'est pas empêché par l'entrée d'une clé d'entrée erronée. Cependant, la mémoire 2 est dans ce cas maintenue bloquée en lecture pour un mode test, en maintenant l'entrée chip select CS non activée (étape E22).

Il sera maintenant décrit un troisième mode de réalisation de l'invention, selon lequel la lecture de la clé interne s'effectue en utilisant un mode de décharge de données (dump mode).

Le mode de décharge de données est un mode de test de mémoires dans lequel - à chaque cycle de l'horloge présentée à son entrée, l'octet correspondant à l'adresse courante passe sur le bus de données 18 vers une unité de vérification (checksum), et l'adresse courante est incrémentée ou décrémentée. L'unité de vérification traite chaque octet ainsi extrait comme une valeur numérique sur laquelle est réalisé un calcul algorithmique. Ce calcul est récursif en ce sens que le résultat d'un calcul précédent est combiné avec la valeur actuelle. De la sorte, le résultat du dernier calcul algorithmique est fonction de chacune des valeurs extraites de la mémoire. Ce résultat est généralement fourni en sortie vers un circuit extérieur afin de vérifier la validité des données, sans prendre pour autant connaissance de ces dernières.

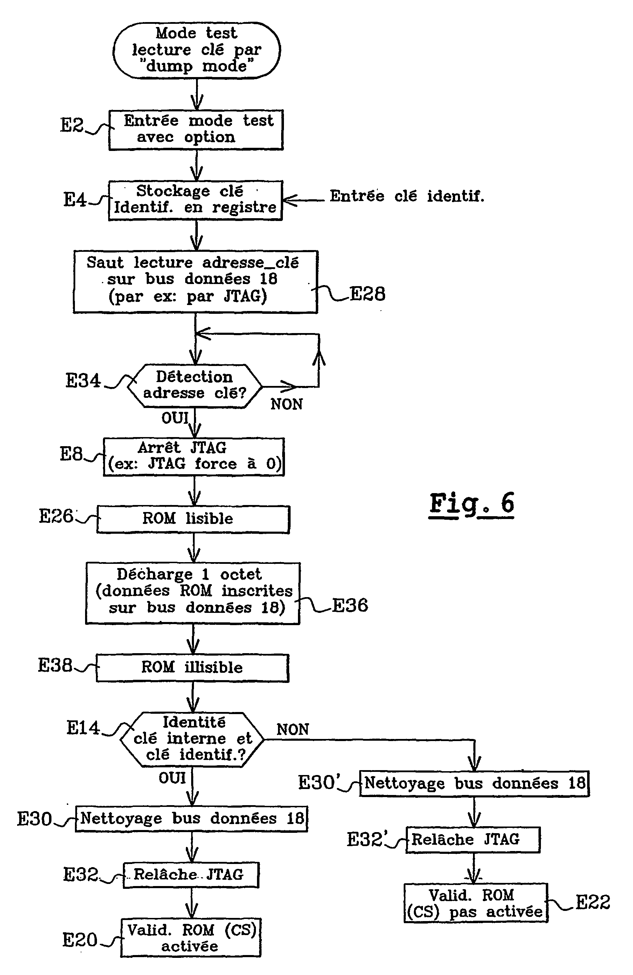

En utilisant ce mode avec un circuit adapté, on peut réaliser une séquence de lecture contrôlée de la clé interne selon une procédure qui sera décrite par référence à l'organigramme de la figure 6. Les étapes communes ou analogues à celles des figurés 3 et/ou 4 portent les mêmes références et ne seront pas détaillées à nouveau par souci de concision.

On entre dans le mode test avec option activée (étape E2) pour démarrer les opérations du mode test avec lecture de clé par le mode de décharge (dump mode) (étape E2).

Le circuit se met ensuite en attente de la clé d'entrée fournie manuellement de l'extérieur. Cette clé est stockée dans le registre 12a de l'unité de protection 4 (étape 4).

Ensuite le logiciel TESTROM provoque un saut d'adresse pour la lecture de la clé interne, par exemple en agissant sur le paramétrage du protocole JTAG (étape E28). Le circuit se positionne pour détecter cette adresse de la clé (étape E34). A la détection de celle-ci, le programme provoque la désactivation du mode de communication par inhibition du protocole JTAG (étape E8) et autorise la lecture du contenu des données stockées dans la mémoire ROM 2 (étape E26) par l'activation de son entrée de validation chip select CS.

La mémoire ROM 2 étant mise en mode décharge (dump mode), l'octet comportant la clé interne est délivré au cycle d'horloge qui suit (étape E36). Cet octet transite sur le bus de données 18 vers le registre 12a de l'unité de protection 4.

Au cycle d'horloge suivant, la mémoire 2 est mise hors du mode de décharge et redevient protégée (étape E38).

La suite du processus est identique aux étapes E14, E20, E22, E22', E30, E30' et E32' de la figure 5 et sa description ne sera pas répétée. Ainsi, la comparaison permet le passage au mode test s'il y a identité entre les clés de référence (obtenue ici par le mode décharge) et d'identification.

On note que le nettoyage du bus de données (étapes E30/E30') peut aussi s'effectuer en y forçant une valeur dépourvue d'information (par exemple 00).

La lecture de la clé par mode de décharge (dump mode) peut être mise en oeuvre dans tous les modes de réalisation décrits en y apportant les éventuelles modifications qui s'imposent.

Toutes les façons de lire la clé interne dans la mémoire protégée permettent d'utiliser une clé codée soit sur un seul octet, soit sur plusieurs octets. L'exploitation d'une clé de plusieurs octets requiert simplement une adaptation du processus pour lire et charger successivement une suite d'octets correspondant à la clé.

Par exemple, on peut introduire de façon récursive un octet qui constitue un morceau de la clé d'entrée (cf. étape E4 des figures 3, 5 et 6) que l'on compare à un octet correspondant de la clé interne (cf. étape E14). Un registre interne, par exemple au niveau de l'unité de protection 4, retient les résultats de comparaison pour chaque octet introduit et comparé des clés de référence et d'identification. La mémoire sera alors déverrouillée seulement s'il y a identité entre les octets comparés des clés de référence et d'identification à chacune des comparaisons. La mémoire reste verrouillée si un bit au moins de la clé d'entrée ne correspond à la clé interne.

Dans une mise en oeuvre avec une clé codée de plusieurs octets, on peut charger tous les octets de la clé interne depuis la mémoire protégée vers une mémoire ré-inscriptible (RAM) au début du processus de validation. Cette approche est particulièrement avantageuse lorsque la lecture de la clé est exécutée par des moyens logiciels (cf. figure 4). Le logiciel TESTROM peut alors s'exécuter dans un mode protégé (inhibition du protocole JTAG) pour charger les octets les uns après les autres dans le registre intermédiaire. La comparaison se réalise cependant par des moyens matériels (comparateur 12b, cf. figure 4).

On comprendra que l'invention peut être mise en oeuvre dans tout circuit intégré qui comprend une mémoire reliée à d'autres éléments du circuit intégré par un bus interne.

En effet, tout le mécanisme de protection de mémoire par clé codée peut être intégré dans un bloc fonctionnel de mémorisation de données logé dans un tel circuit intégré. Ce bloc fonctionnel comportera alors sensiblement les mêmes entrées et sorties qu'un simple bloc de mémoire, tout en offrant les possibilités de protection de données par clé conformément au principe de l'invention. Cette disposition peut être réalisée par exemple en intercalant l'unité de protection entre ces cellules de stockage et la sortie des données. De plus, aucun système de communication (comme le protocole JTAG) n'a besoin d'être verrouillé durant l'identification.

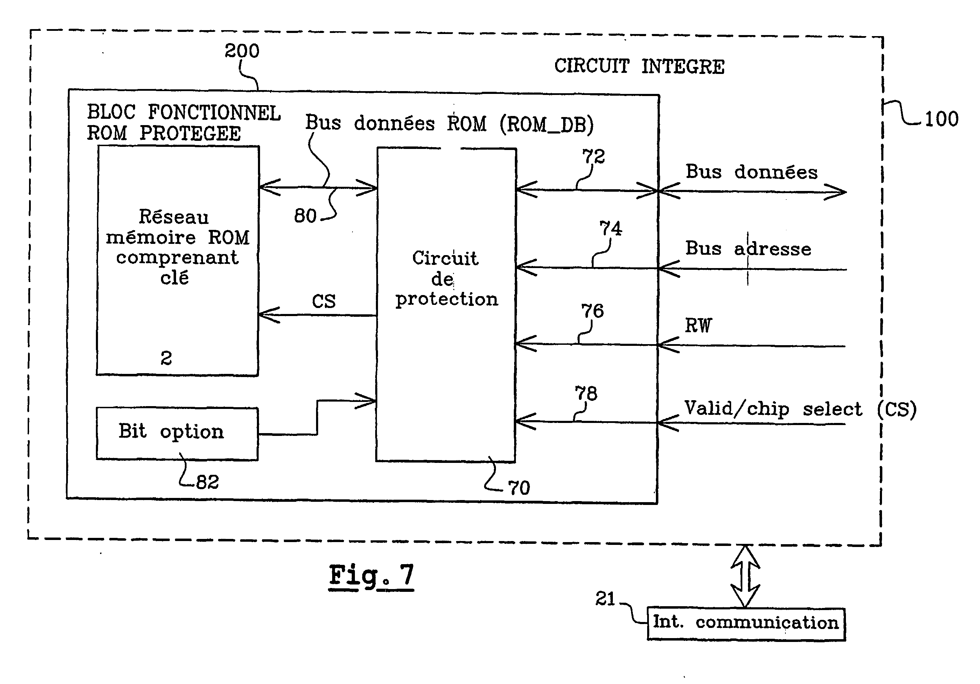

La figure 7 montre un exemple de mise en oeuvre d'une telle protection intégrée dans un bloc fonctionnel de mémorisation 200 qui fait partie d'un système électronique intégré sur microcircuit 100. Ce dernier peut être un microcontôleur ou microprocesseur analogue à celui de la figure 2. Le bloc fonctionnel 200 comprend d'une part une mémoire ROM 2 dans laquelle sont contenues à la fois les données protégées et la clé codée (clé interne), et d'autre part un circuit de protection 70. Ce dernier constitue un écran d'interface entre la mémoire 2 et les entrées/sorties du reste du microcircuit. A ce titre, le circuit de protection 70 assure : les connexions 72 à un bus de données externe (sortie de données stockées), les connexions 74 à un bus adresses externe, une entrée lecture/écriture RW 76 et une entrée de validation (chip select) CS 78.

La mémoire ROM 2 communique les données en mémoire vers le circuit de protection 70 via un bus de données 80 interne au bloc fonctionnel de mémorisation 200. Ce bus est relié aux connexions de sortie de données 72 sous contrôle du circuit de protection.

Le circuit de protection 70 émet en sortie le signal de validation CS pour le réseau sous son contrôle. La mise en fonctionnement du circuit de protection est commandé par un bit "option" provenant d'une cellule 82 contenue dans le bloc de mémorisation 200 et programmée lors de la fabrication. Le positionnement à l'état 1 de ce bit valide le fonctionnement de la protection, alors que son positionnement à l'état 0 rend le circuit transparent ; la protection est alors inopérante.

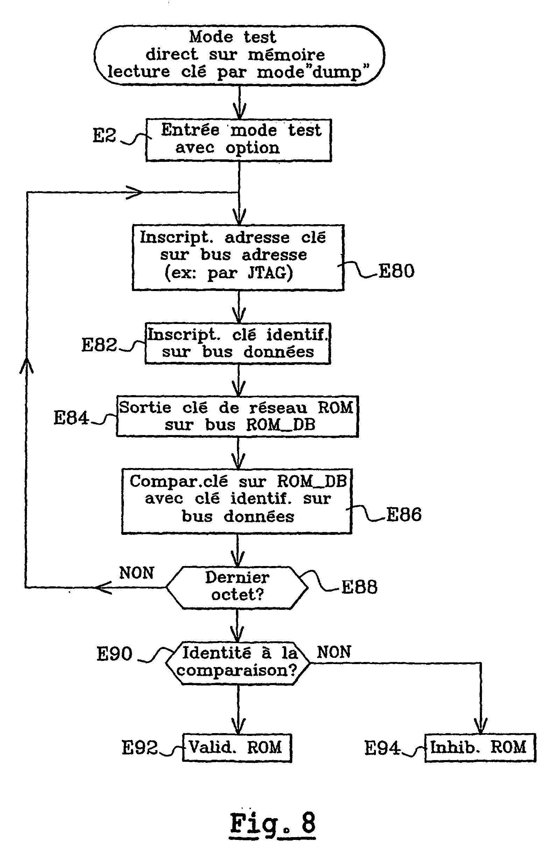

Le processus de vérification de la clé avec le circuit de protection 70 sera décrit par référence à l'organigramme de la figure 8.

Comme pour les cas précédents, on commence par l'activation de l'entrée en mode test (étape E2), en supposant que l'option est activée.

Ensuite, on sélectionne sur le bus d'adresses l'adresse de mémoire ROM 2 à laquelle est stocké l'octet de la clé interne, ou le premier octet de cette clé si cette clé est codée sur plusieurs octets (étape E80). Cette adresse peut être livrée par exemple au moyen du protocole JTAG, soit automatiquement par le circuit de protection 70, soit extérieurement.

L'octet correspondant de la clé d'entrée est présentée depuis l'extérieur du bloc fonctionnel 200 sur le bus de données (étape E82).

L'octet se trouvant à l'adresse sélectionnée à l'étape E80 est délivré sur le bus 80 ROM_DB interne au bloc fonctionnel 200(étape E84). Le circuit de protection 70 dispose alors des octets correspondant à la clé interne (via ce bus interne) et à la clé de vérification (via le bus de données).

Ces deux octets sont comparés et le résultat de la comparaison est stocké dans un registre interne (étape E86).

Ensuite, le circuit de protection 70 détermine s'il y a un autre octet à traiter (étape E88). Si tel est le cas, le processus se repositionne au début de l'étape E80 pour permettre de réaliser une nouvelle comparaison avec l'octet suivant de la clé codée.

Lorsqu'il n'y a pas de nouvel octet à traiter, on détermine si l'ensemble de la comparaison montre qu'il y a eu identité entre le ou chaque octet comparé (étape E90). Si tel est le cas, la clé d'entrée est considérée comme correcte et le bloc fonctionnel de mémorisation 200 est validé en lecture (étape E92).

Dans le cas contraire, le circuit de protection 70 provoque l'inhibition de la lecture de la mémoire 2 en appliquant un état logique correspondant à l'entrée de validation CS (chip select) (étape E94).

On comprendra de ce qui précède que la protection est remarquable en ce qu'elle repose sur l'utilisation d'une clé stockée dans la partie protégée de la mémoire, par exemple celle qui contient le programme utilisateur. Cette clé peut être rendue différente pour chaque type de contenu stocké, par exemple spécifique à chaque code de programme utilisateur. Elle peut être choisie par le client, et sa taille (nombre de bits) n'a quasiment pas d'effet sur la taille du circuit de décodage associée à la mémoire.

L'accès gardé par clé permet de réaliser un test complet de la mémoire (en cas de clé d'entrée correcte), notamment la sortie de chaque octet sur le bus données de la mémoire ou du port approprié du circuit dans lequel la mémoire est intégrée. S'il est éventuellement possible de pirater un code dès lors que l'on connaît la clé qui lui correspond et le protocole d'entrée de la clé, il est en revanche fastidieux et difficile, en connaissant le protocole, de retrouver une clé relativement longue (par exemple de 128 bits ou plus). L'invention procure donc un excellent niveau de sécurité.

## Revendications

1. Système de contrôle d'accès à des données protégées stockées dans une mémoire, intégrant une clé interne et comprenant :
- des moyens de mémorisation (2;200) ayant une zone protégée (2a) de mémorisation des données protégées et une entrée de commande (CS; CS-R) permettant de bloquer ou d'autoriser l'accès à ces données, et les moyens de mémorisation (2) comprenant une zone de commande de lecture (2b) dans laquelle sont stockées des commandes de lecture de la clé interne (TESTROM),
- des moyens de validation (4) pour contrôler une demande d'accès aux données protégées en agissant sélectivement sur l'entrée de commande,
- des moyens d'entrée d'une clé d'entrée fournie depuis l'extérieur, les moyens de validation (4) autorisant l'accès aux données protégées que lorsqu'il y a concordance entre la clé interne et la clé d'entrée ;
- **caractérisé en ce que** l'accès à la zone de commande de lecture (2b) est régi par une commande (CS-T) séparée de la commande (CS_R) de lecture de la zone protégée (2a).

2. Système selon la revendication 1, **caractérisé en ce que** la clé interne est stockée dans les moyens de mémorisation (2).

3. Système selon la revendication 2, **caractérisé en ce que** la clé interne est stockée dans ladite zone protégée (2a) avec les données protégées.

4. Système selon l'une quelconque des revendications 1 3, **caractérisé en ce que** les moyens de validation (4) sont reliés à une liaison interne (6, 6') permettant le chargement de la clé interne et à une liaison externe (8, 21) permettant le chargement de la clé d'entrée, et **en ce que** les moyens de validation (4) comprennent en outre des moyens blocage de communication de données (26, TESTROM) interdisant un transfert de données de la liaison interne vers la liaison externe lorsque la clé interne est susceptible d'être présente dans la liaison interne.

5. Système selon la revendication 4, **caractérisé en ce que** la liaison externe (8, 21) est un système d'entrée et de sortie de données régi par le protocole JTAG, et **en ce que** les moyens de blocage agissent sur une entrée de validation du protocole JTAG (valid JTAG).

6. Système selon l'une quelconque des revendications 4 et 5, **caractérisé en ce que** la liaison interne (6, 6') fait partie d'un bus de données d'un circuit comprenant une unité centrale CPU (10), et **en ce que** les moyens de validation (4) comprennent des moyens (26) pour inhiber l'unité centrale et assurer de manière autonome la commande du bus de données et le chargement de la clé interne.

7. Système selon la revendication 6, **caractérisé en ce que** les moyens (26) pour inhiber l'unité centrale (10) agissent sur l'entrée d'horloge de celle-ci.

8. Système selon l'une quelconque des revendications 1 à 7, **caractérisé en ce que** la clé interne est chargée dans les moyens de validation (4) par mise en mode de décharge (dump mode) des moyens de mémorisation (2).

9. Système selon l'une quelconque des revendications précédentes, **caractérisé en ce qu'**il intervient pour contrôler l'accès aux données depuis l'extérieur lors d'un mode test.

10. Système selon l'une quelconque des revendications précédentes, **caractérisé en ce que** la clé interne occupe une pluralité d'adresses, et **en ce que** les moyens de validation (4) comprennent des moyens (12a) pour charger des parties de la clé interne depuis leurs adresses respectives et des parties correspondantes de la clé d'entrée et pour autoriser l'accès aux informations protégées seulement s'il y a concordance sur l'ensemble desdites parties.

11. Système selon l'une des revendications précédentes, **caractérisé en ce qu'**il est intégré dans un microcircuit (1) comprenant une unité centrale (10), tel qu'un microcontrôleur ou un microprocesseur.

12. Système selon l'une quelconque des revendications 1 à 10, **caractérisé en ce qu'**il est intégré dans un bloc fonctionnel de mémorisation de données (200) faisant partie d'un microcircuit (100).

13. Système selon la revendication 12, **caractérisé en ce que** les moyens de validation (4) sont interposés entre, d'une part, un réseau mémoire comprenant les données protégées et la clé interne et, d'autre part, les ports de connexion aux bus de données et d'adresses (respectivement 72, 74) et de l'entrée (78) de validation CS (chip select).

14. Système selon la revendication 12 ou 13, **caractérisé en ce que** le microcircuit comprend un élément permettant à un stade initial de sélectionner la mise en oeuvre de la protection par clé.

15. Système selon l'une quelconque des revendications précédentes, **caractérisé en ce que** les moyens de mémorisation (2) comprennent une mémoire semiconducteur figée du type ROM.

16. Système selon l'une quelconque des revendications précédentes, **caractérisé en ce que** les données protégées constituent un code source d'un microprogramme.

17. Microcircuit comprenant des moyens d'exécution d'un microprogramme contenu dans des moyens de mémorisation (2), **caractérisé en ce que** l'accès depuis l'extérieur du microcircuit aux éléments du microprogramme est contrôlé par un système de contrôle d'accès à des données protégées stockées selon la revendication 16.

18. Procédé de contrôle d'accès à des données protégées stockées dans une zone protégée (2a) de moyens de mémorisation (2), ces derniers ayant une entrée de commande (CS; CS-R) permettant de bloquer ou d'autoriser l'accès à ces données, l'accès aux données protégées n'étant autorisé que s'il y a concordance entre une clé interne et une clé d'entrée fournie depuis l'extérieur, les moyens de mémorisation (2) comprenant une zone de commande de lecture (2b) dans laquelle sont stockées des commandes de lecture de la clé interne (TESTROM), **caractérisé en ce que** l'accès à la zone de commande de lecture (2b) est régi par une commande (CS-T) séparée de la commande (CS_R) de lecture de la zone protégée (2a).

19. Procédé selon la revendication 18, **caractérisé en ce que** la clé interne est stockée dans les moyens de mémorisation (2).

20. Procédé selon la revendication 19, **caractérisé en ce que** la clé interne est stockée dans ladite zone protégée (2a) avec les données protégées.

21. Procédé selon l'une quelconque des revendications 18 à 20, **caractérisé en ce que** la clé interne est chargée dans des moyens de validation (4) par mise en mode de décharge (dump mode) des moyens de mémorisation (2).

22. Procédé selon l'une quelconque des revendications 18 à 21, **caractérisé en ce qu'**il intervient pour contrôler l'accès aux données depuis l'extérieur lors d'un mode test.

23. Procédé selon l'une quelconque des revendications 18 à 22, **caractérisé en ce que** la clé interne occupe une pluralité d'adresses, et **en ce que** la validation de la clé d'entrée comprend le chargement des parties de la clé interne depuis leurs adresses respectives et des parties correspondantes de la clé d'entrée et l'autorisation de l'accès aux informations protégées seulement s'il y a concordance sur l'ensemble desdites parties.

24. Procédé selon l'une des revendications 18 à 23, **caractérisé en ce qu'**il est mis en oeuvre dans un microcircuit comprenant une unité centrale (10), tel qu'un microcontrôleur ou un microprocesseur.

25. Procédé selon l'une quelconque des revendications 18 à 23, **caractérisé en ce qu'**il est mis en oeuvre dans un bloc fonctionnel de mémorisation de données (200) faisant partie d'un microcircuit (100).

## Claims

1. System for controlling access to protected data stored in a memory, integrating an internal key and comprising:
- storage means (2; 200) having a protected area (2a) for storing protected data and a control input (CS; CS-R) making it possible to disable or enable access to these data, and the storage means (2) comprising a read instruction area (2b) in which instructions for reading the internal key (TESTROM) are stored;
- validation means (4) for controlling a request for access to the protected data by acting selectively on the control input;
- means of inputting an input key supplied from outside, the validation means (4) enabling access to the protected data only when there is agreement between the internal key and the input key;
**characterised in that** access to the read instruction area (2b) is governed by a control (CS-T) separate from the control (CS_R) for reading the protected area (2a).

2. System according to Claim 1, **characterised in that** the internal key is stored in the storage means (2).

3. System according to Claim 2, **characterised in that** the internal key is stored in the said protected area (2a) with the protected data.

4. System according to any one of Claims 1 to 3, **characterised in that** the validation means (4) are connected to an internal link (6, 6') allowing loading of the internal key and to an external link (8, 21) allowing loading of the input key, and **in that** the validation means (4) also comprise data communication disabling means (26, TESTROM) preventing a transfer of data from the internal link to the external link when the internal key is liable to be present on the internal link.

5. System according to Claim 4, **characterised in that** the external link (8, 21) is a data input and output system governed by the JTAG protocol, and **in that** the disabling means act on a JTAG protocol validation input (JTAG valid).

6. System according to any one of Claims 4 and 5, **characterised in that** the internal link (6, 6') forms part of a data bus of a circuit comprising a central unit CPU (10), and **in that** the validation means (4) comprise means (26) for inhibiting the central unit and autonomously providing control of the data bus and loading of the internal key.

7. System according to Claim 6, **characterised in that** the means (26) for inhibiting the central unit (10) act on the clock input thereof.

8. System according to any one of Claims 1 to 7, **characterised in that** the internal key is loaded into the validation means (4) by putting the storage means (2) into dump mode.

9. System according to any one of the preceding claims, **characterised in that** it takes action to control access to the data from outside during a test mode.

10. System according to any one of the preceding claims, **characterised in that** the internal key occupies a plurality of addresses, and **in that** the validation means (4) comprise means (12a) for loading parts of the internal key from their respective addresses and corresponding parts of the input key and for enabling access to the protected information only if there is agreement over all the said parts.

11. System according to one of the preceding claims, **characterised in that** it is integrated into a microcircuit (1) comprising a central unit (10), such as a microcontroller or a microprocessor.

12. System according to any one of Claims 1 to 10, **characterised in that** it is integrated into a functional data storage block (200) forming part of a microcircuit (100).

13. System according to Claim 12, **characterised in that** the validation means (4) are interposed between, on the one hand, a memory network comprising the protected data and the internal key and, on the other hand, the ports for connecting to the data and address buses (respectively 72, 74) and for the validation input CS (chip select) (78).

14. System according to Claim 12 or 13, **characterised in that** the microcircuit comprises an element making it possible at an initial stage to select the implementation of protection by key.

15. System according to any one of the preceding claims, **characterised in that** the storage means (2) comprise a fixed semiconductor memory of the ROM type.

16. System according to any one of the preceding claims, **characterised in that** the protected data constitute source code of a microprogram.

17. Microcircuit comprising means of executing a microprogram contained in storage means (2), **characterised in that** access from outside the microcircuit to the elements of the microprogram is controlled by a system for controlling access to stored protected data according to Claim 16.

18. Method of controlling access to protected data stored in a protected area (2a) of storage means (2), the latter having a control input (CS; CS-R) making it possible to disable or enable access to these data, access to the protected data being enabled only if there is agreement between an internal key and an input key supplied from outside, the storage means (2) comprising a read instruction area (2b) in which instructions for reading the internal key (TESTROM) are stored, **characterised in that** access to the read instruction area (2b) is governed by a control (CS-T) separate from the control (CS_R) for reading the protected area (2a).

19. Method according to Claim 18, **characterised in that** the internal key is stored in the storage means (2).

20. Method according to Claim 19, **characterised in that** the internal key is stored in the said protected area (2a) with the protected data.

21. Method according to any one of Claims 18 to 20, **characterised in that** the internal key is loaded into validation means (4) by putting the storage means (2) into dump mode.

22. Method according to any one of Claims 18 to 21, **characterised in that** it takes action to control access to the data from outside during a test mode.

23. Method according to any one of Claims 18 to 22, **characterised in that** the internal key occupies a plurality of addresses, and **in that** validation of the input key comprises the loading of parts of the internal key from their respective addresses and corresponding parts of the input key and the enabling of access to the protected information only if there is agreement over all the said parts.

24. Method according to one of Claims 18 to 23, **characterised in that** it is implemented in a microcircuit comprising a central unit (10), such as a microcontroller or a microprocessor.

25. Method according to any one of Claims 18 to 23, **characterised in that** it is implemented in a functional data storage block (200) forming part of a microcircuit (100).

## Patentansprüche

1. System zur Kontrolle eines Zugriffs auf geschützte Daten, die in einem Speicher gespeichert sind, unter Einbeziehung eines inneren Schlüssels und mit:
- einer Speichereinrichtung (2;200) mit einem geschützten Bereich (2a) zur Speicherung geschützter Daten und einer Eingabestelle für einen Befehl (CS;CS-R), der den Zugriff auf diese Daten sperren oder zulassen kann, und wobei die Speichereinrichtung (2) einen Lesebefehl-Bereich (2b) aufweist, in welchem Befehle zum Lesen des inneren Schlüssels (TESTROM) gespeichert sind,
- einer Validierungseinrichtung (4) zum Kontrollieren einer Anfrage eines Zugriffs auf die geschützten Daten, indem selektiv auf den Befehlseingang eingewirkt wird,
- einer Zugangseinrichtung mit einem von außen angebrachten Zugangsschlüssel, wobei die Validierungseinrichtung (4) den Zugriff auf geschützte Daten nur zulässt, wenn eine Übereinstimmung zwischen dem internen Schlüssel und dem Zugangsschlüssel vorliegt;
- **dadurch gekennzeichnet, dass** der Zugriff auf den Lesebefehl-Bereich (2b) durch einen Befehl (CS-T) bestimmt wird, der vom Befehl (CS_R) zum Lesen des geschützten Bereichs (2a) losgelöst ist.

2. System nach Anspruch 1, **dadurch gekennzeichnet, dass** der interne Schlüssel in der Speichereinrichtung (2) gespeichert ist.

3. System nach Anspruch 2, **dadurch gekennzeichnet, dass** der interne Schlüssel in dem geschützten Bereich (2a) mit den geschützten Daten gespeichert ist.

4. System nach einem der Ansprüche 1 bis 3, **dadurch gekennzeichnet, dass** die Validierungseinrichtung (4) eine Schnittstelle bildet mit einer internen Verbindung (6, 6'), welche die Ladung des internen Schlüssels ermöglicht, und mit einer externen Verbindung (8, 21), welche die Ladung des Zugangsschlüssels ermöglicht, und dass die Validierungseinrichtung (4) ferner Mittel zur Sperrung der Datenkommunikation (26, TESTROM) aufweist, welche eine Datenübertragung von der internen Verbindung zur externen Verbindung untersagen, wenn der interne Schlüssel in der inneren Verbindung nachweisbar ist.

5. System nach Anspruch 4, **dadurch gekennzeichnet, dass** die externe Verbindung (8, 21) ein Eingabe- und Ausgabesystem von Daten ist, das durch das Protokoll JTAG bestimmt wird, und dass die Mittel zur Sperrung auf eine Validierungseingabe des Protokolls JTAG (valid JTAG) einwirkt.

6. System nach einem der Ansprüche 4 und 5, **dadurch gekennzeichnet, dass** die interne Verbindung (6, 6') ein Teil eines Datenbusses eines Schaltkreises ist, der eine Zentraleinheit CPU (10) umfasst, und dass die Validierungseinrichtung (4) Mittel (26) umfasst, um die Zentraleinheit anzuhalten und den Befehl des Datenbusses und die Ladung des internen Schlüssels in autonomer Weise sicher zu stellen.

7. System nach Anspruch 6, **dadurch gekennzeichnet, dass** die Mittel (26) zum Anhalten der Zentraleinheit (10) auf eine Zeiteingabe derselben einwirken.

8. System nach einem der Ansprüche 1 bis 7, **dadurch gekennzeichnet, dass** der interne Schlüssel in der Validierungseinrichtung (4) durch Entladung (dump mode) der Speichereinrichtung (2) geladen wird.

9. System nach einem der vorstehenden Ansprüche, **dadurch gekennzeichnet, dass** dieses interveniert, um den Datenzugriff von außen bei einem Testmodus zu kontrollieren.

10. System nach einem der vorstehenden Ansprüche, **dadurch gekennzeichnet, dass** der interne Schlüssel eine Mehrzahl von Adressen belegt und dass die Validierungseinrichtung (4) Mittel (12a) aufweist, um Bereiche des internen Schlüssels an ihren jeweiligen Adressen und mit dem Zugangsschlüssel korrespondierende Bereiche zu speichern und um den Zugriff auf geschützte Informationen nur dann zuzulassen, wenn eine Übereinstimmung über die Gesamtheit der Bereiche vorliegt.

11. System nach einem der vorstehenden Ansprüche, **dadurch gekennzeichnet, dass** dieses in einen Mikroschaltkreis (1) integriert ist, der eine Zentraleinheit (10) umfasst, wie einen Mikrokontrolleur oder einen Mikroprozessor.

12. System nach einem der Ansprüche 1 bis 10, **dadurch gekennzeichnet, dass** dieses im funktionalen Block zur Datenspeicherung (200) integriert ist, der einen Teil eines Mikroschaltkreises (100) bildet.

13. System nach Anspruch 12, **dadurch gekennzeichnet, dass** die Validierungseinrichtung (4) zwischen einerseits einem Speichernetz mit den geschützten Daten und dem internen Schlüssel und andererseits den Anschlussstellen an die Busse für die Daten und Adressen (jeweils 72, 74) und für die Eingabe (78) zur Validierung CS (chip select) angeordnet ist.

14. System nach Anspruch 12 oder 13, **dadurch gekennzeichnet, dass** der Mikroschaltkreis ein Element umfasst, welches in einem Initialstadium ermöglicht, die Ausführung des Schutzes mittels Schlüssel auszuwählen.

15. System nach einem der vorstehenden Ansprüche, **dadurch gekennzeichnet, dass** die Speichereinrichtung (2) einen Halbleiter- Festspeicher vom Typ ROM aufweist.

16. System nach einem der vorstehenden Ansprüche, **dadurch gekennzeichnet, dass** die geschützten Daten einen Quellcode eines Mikroprogramms bilden.

17. Mikroschaltkreis mit Ausführungsmitteln eines Mikroprogramms, das in einer Speichereinrichtung (2) enthalten ist, **dadurch gekennzeichnet, dass** der Zugriff von außerhalb des Mikroschaltkreises auf Elemente des Mikroprogramms durch eine System zur Kontrolle des Zugriffs auf geschützte Daten kontrolliert wird, die gemäß Anspruch 16 gespeichert sind.

18. Verfahren zur Kontrolle eines Zugriffs auf geschützte Daten, die in einem geschützten Bereich (2a) einer Speichereinrichtung (2) gespeichert sind, wobei letztere eine Eingabestelle für Befehle (CS; CS-R) aufweist, die ermöglichen, einen Zugriff auf diese Daten zu sperren oder zuzulassen, wobei der Zugriff auf geschützte Daten nur dann zugelassen wird, wenn eine Übereinstimmung zwischen dem internen Schlüssel und einem von außen angebrachten Zugangsschlüssel vorliegt, wobei die Speichereinrichtung (2) einen Lesebefehl- Bereich (2b) aufweist, in welchem Lesebefehle des internen Schlüssels (TESTROM) gespeichert sind, **dadurch gekennzeichnet, dass** der Zugriff auf den Lesebefehl-Bereich (2b) durch einen Befehl (CS-T) bestimmt wird, der von dem Befehl (CS_R) zum Lesen des geschützten Bereichs (2a) losgelöst ist.

19. Verfahren nach Anspruch 18, **dadurch gekennzeichnet, dass** der interne Schlüssel in der Speichereinrichtung (2) gespeichert wird.

20. Verfahren nach Anspruch 19, **dadurch gekennzeichnet, dass** der interne Schlüssel in dem geschützten Bereich (2a) mit den geschützten Daten gespeichert wird.

21. Verfahren nach einem der Ansprüche 18 bis 20, **dadurch gekennzeichnet, dass** der interne Schlüssel in einer Validierungseinrichtung (4) durch Entladung (dump mode) der Speichereinrichtung (2) geladen wird.

22. Verfahren nach einem der Ansprüche 18 bis 21, **dadurch gekennzeichnet, dass** dieses interveniert, um den Datenzugriff von außen bei einem Testmodus zu kontrollieren.

23. Verfahren nach einem der Ansprüche 18 bis 22, **dadurch gekennzeichnet, dass** der interne Schlüssel eine Mehrzahl von Adressen belegt, und dass die Validierung des Zugangsschlüssels das Laden von Partien des internen Schlüssels an ihre jeweiligen Adressen und von korrespondierenden Partien des Zugangsschlüssels und die Zulassung des Zugriffs auf geschützte Informationen nur dann umfasst, wenn eine Übereinstimmung über die Gesamtheit der Partien vorliegt.

24. Verfahren nach einem der Ansprüche 18 bis 23, **dadurch gekennzeichnet, dass** dieses in einem Mikroschaltkreis durchgeführt wird, der eine Zentraleinheit (10) umfasst, wie einen Mikrokontrolleur oder einen Mikroprozessor.

25. Verfahren nach einem der Ansprüche 18 bis 23, **dadurch gekennzeichnet, dass** dieses in einem funktionalen Block zur Speicherung von Daten (200) durchgeführt wird, der einen Teil eines Mikroschaltkreises (100).
